# EUROPEAN PATENT SPECIFICATION

(11) **EP 1 024 609 B1**
(45) Date of publication and mention of the grant of the patent: **17.10.2007**
(21) Application number: 00200044.6
(22) Date of filing: 06.01.2000
(51) Int. Cl.: H04B 7/185

(54) **Low priority data transmission via satellite using a unused capacity of its transponder**
Übertragung Daten mit geringer Priorität über ein Satellit durch Verwendung der unbenutzte Kapazität des Transponders
Transmission de données de priorité faible via un satellite en utilisant une capacité inutilisée du transpondeur

(30) Priority: 28.01.1999 IT TO990060
(43) Date of publication of application: 02.08.2000
(73) Proprietor: RAI RADIOTELEVISIONE ITALIANA S.p.A., 10135 Torino (IT)
(72) Inventor: Morello, Alberto, 10126 Torino (IT)
(74) Representative: Spandonari, Carlo

(56) References cited:
- US-A- 5 276 908
- US-A- 5 511 233
- US-A- 5 815 506

## Description

### Disclosure

This invention is concerned with a method for data transmission via satellite, and more particularly is concerned with a method for transmission of low-priority data, by taking advantage of the idle times of a satellite transponder dedicated to high-priority services (e.g. services known as "Satellite News Gathering", or SNG).

Television companies and the like usually maintain permanent availability of satellite transponders for uploading external audio/video takes from movable stations to production centers, either in analogic FM format or in digital format. The satellite transponder is usually used by several movable stations, according to a frequency-sharing technique (FDMA) giving access to a slot of the available channel (usually 72 MHz or 36 MHz).

Such high-priority links are obviously of a temporary and scarcely foreseeable nature, and require that the availability of the channel is guaranteed whenever the services request it. Consequently, the exploitation of the satellite resources turns out to be very low, typically less than 50% of the time.

US-A- 5 815 506 discloses how to use out-of-band signalling channels for transmitting signals from a first station to a second station via a satellite transponder by, thereby reducing the inefficiency of the system. However, this method only uses the limited-capacity, out-of-band signalling channels, it only allows short messages to be transmitted, and does not exploit the idle, high-capacity resources of the satellite transponder.

This invention now aims at more fully exploiting the unused capacity of such transponders for transmitting low-priority data, without hindering or delaying the SNG transmission services to which the satellite is dedicated, and without requiring modifications either to the apparatus used or to the procedures followed in the apparatus.

The invention achieves the above and other objects and advantages, such as will appear from the following disclosure, with a process for transmission of low-priority data via satellite, having the features recited in claim 1.

A preferred embodiment of the invention will now be disclosed, by way of nonlimiting example, with reference to the attached drawings, wherein:
Fig. 1 is a frequency diagram showing the utilization of the transmission bandwidth of a satellite transponder; and
Fig. 2 is a block diagram of data transmission apparatus via satellite in which the method of the invention is applied.

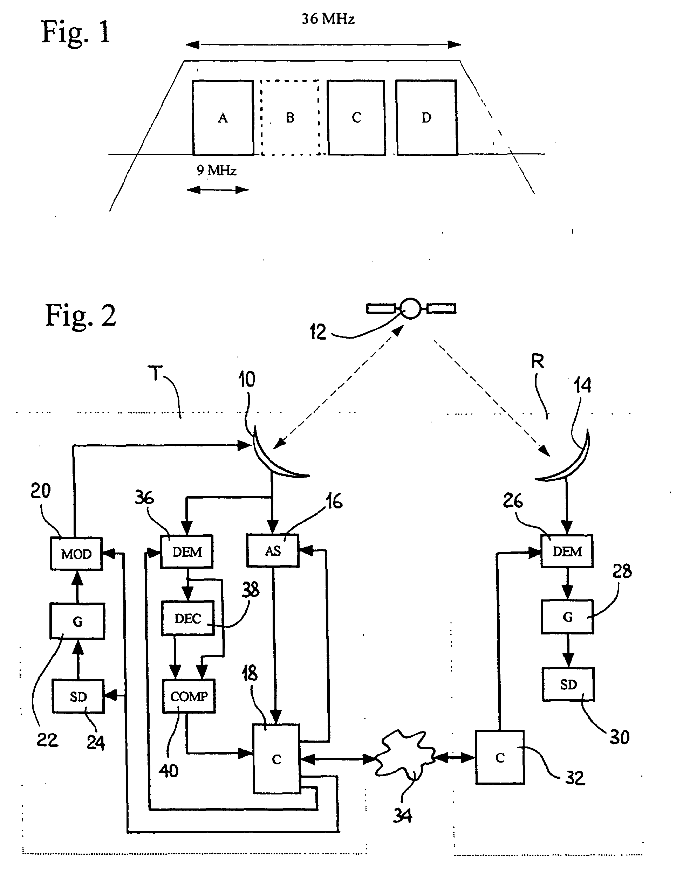

Figure 1 shows a transponder channel as a frequency diagram with 36 MHz bandwidth, which is subdivided into four frequency slot A, B, C and D, having a 9 MHz bandwidth. Slots A, C and D (by way of example) are assumed busy, i.e, used by high-priority services, e.g. SNG services, while slot B is assumed idle, although it could be taken at any time and without warning by a high-priority transmission such as an audio/video uploading or link.

The method of the invention is essentially based on the following approach:
- using the momentarily idle slot on the transponder for transmitting a low-priority data signal;
- immediately breaking off the transmission, and thereby releasing the slot, as soon as another signal (be it analogic or digital) is transmitted over the same slot;
- if one or more data packets are lost in the interruption of the low-priority transmission, retransmitting the lost packets, upon request by the receiver over a terrestrial return channel.

With the above approach, the transponder remains completely available for the high-priority services, but the transponder resources that would otherwise be wasted are at least partly recovered for use.

The above approach is advantageously implemented in the apparatus shown diagrammatically on Figure 2, where T is a transmitting/receiving station according to the invention, and R is a receiving station remote from the former.

In transmitting station T, a parabolic antenna 10 for transmission of low-priority data is directed to a satellite transponder 12, toward which is also directed a parabolic antenna 14 for reception of low-priority data in receiving station R.

A spectrum analyzer 16 is connected to antenna 10. Spectrum analyzer 16 is controlled by a programed digital controller 18 for receiving signals transmitted by the transponder in the desired channel (typically a 36 MHz frequency bandwidth) and measuring the signal power received in a desired one of the frequency slots into which the channel is subdivided (typically four frequency slots, each being 9 MHz wide) and issue such measure to controller 18.

Transmitting station T also comprises a modulator 20, e.g. according to DVB-S (Digital Video Broadcasting-Satellite, standard ETSI EN 300 421), having its output connected to antenna 10, and its input driven by signals for transmission originating from a DVB gateway 22. Gateway 22 receives files of transmission data with protocol UDP/IP from a data server 24, where the low-priority data waiting for transfer are stored, and formats the data with a suitable protocol, preferably DVB Transport Stream, as known in the art. The activity of the chain of devices 20, 22, 24 (all of them known to the person skilled in the art) is controlled by controller 18, which may be a digital microcomputer programmed, in a way known per se, for implementing the operative cycle that is being disclosed here.

In receiving station R, antenna 14 is connected to the input of DVB-S demodulator 26, which is capable of demodulating the data from the signal received through the antenna, and of feeding them to a DVB gateway 28, similar to DVB gateway 22, which in its turn feeds the data to a data server 30 for storage. Demodulator 26 is controlled by a digital controller 32, similar to controller 18, and therefore also comprising a suitably programmed, digital microcomputer. Both controllers 18, 32 are capable of linking to each other through the telephone network or through the Internet or Intranet 34, in a way known per se, for transmitting short messages to each other.

In operation, controller 18 compares the power measure in the slot, as supplied by spectrum analyzer 16, with a predetermined threshold value, higher than the noise level and lower than the level of high-priority signals. Whenever the power in the slot falls below said threshold, controller 18 recognizes that the slot is idle, and consequently enables server 24 to feed data and modulator 20 to initiate data transmission through antenna 10. The useful data are preceded by a coded message sent to controller 32, containing a list of the data about to be transmitted, in the form of file names or packet headings and number of packets.

The data retransmitted to ground by transponder 12 are received by antenna 14, are demodulated by demodulatorn 26 and are stored by data server 30, as explained above.

Receiver R is permanently listening on transponder 12, and is capable, based on the transmission protocol of the low-priority data, of discriminating the useful data from other data which are not relevant for the link under scrutiny, e.g. SNG transmission of high-priority data.

Antenna 10, also operating as a receiving antenna, is also connected to the input of a demodulator 36 (similar to demodulator 26 associated to antenna 14), which receives the signal originally generated and transmitted by modulator 20 and returning to earth from satellite 12. The output signal of demodulator 26 is fed to an error-correcting decoder 38, preferably a Reed-Solomon decoder. The output of demodulator 36 and the output of decoder 38 are further applied to the two inputs of a digital comparator 40, which issues at its output, to drive controller 18, a measure of the error rate in the signal being received. Controller 18 is programmed for interrupting data transmission, disabling server 24 and modulator 20, as soon as the error rate, as supplied by comparator 40, exceeds a predetermined threshold value, e.g. 0.1%. It will be appreciated that, under conditions of normal transmission, the error rate will be low; however, if the priority user of the slot begins to send its own signal to the transponder, the error rate will undergo a sharp and considerable increase. Such increase of the error rate will be regarded by controller 18 as an indication that the transponder services are required by a movable station or other main user of the transponder.

After controller 18 has interrupted a session of data transmission consequently to occupation of the slot by SNG services, it re-enables spectrum analyzer 16 so that it restarts slot monitoring, waiting for it to become free again. On the other hand, controller 32 in the receiver compares the data received with the list of announced data, and sends controller 18 a message over Internet/Intranet, containing a list of data that were not received, so that controller 18 can insert such data in the next transmission.

It can be seen that the method disclosed above insure a completely automatic handling of low-priority data transmission, and require no change to the broadcasting procedures of the SNG signal, which maintains maximum priority.

Although the above description refers to the application of the principles of the invention to the exploitation of one slot only, the method disclosed above can be easily extended to use of several frequency slots, e.g. of the four slots of a 36 MHz standard, or even to slots beloging to several different channels. This can be done by mere duplication of the equipment, but it will be obvious for a person skilled in the art that spectrum analyzer 16 can be driven by controller 18 to cyclically scan the slots. In this case, when controller 18 enables modulator 20 and demodulator 36, it will also prescribe the operating carrier frequency for each case. A message of transmission start sent to controller 32 in the receiver over Internet/Intranet shall include an indication of the slot used for transmission, and controller 32 shall be capable of tuning demodulator 26 to the slot chosen.

Obviously, numerous other changes can be made to the process and the apparatus disclosed above by way of example, as defined by the appended claims.

## Claims

1. A method for transmitting low-priority data from a ground-based transmitter/receiver (T) to a remote ground-based receiver (R) via a satellite transponder (10) dedicated to the transmission of high-priority data in a predetermined frequency slot from a transmitting station to a receiving station, **characterized in that** it comprises the following steps:
- a) the transmitter/receiver (T) monitors whether the transponder (10) is transmitting high-priority data in said frequency slot by checking whether a power measure of said frequency slot is higher than a predetermined power threshold, and the remote receiver (R) monitors the activity of the transponder to check whether low-priority data are being transmitted in said frequency slot;
- b) whenever said frequency slot is free from any high-priority data transmitted by the transponders, the transmitter/receiver initiates transmission of low-priority data according to a desired protocol, and the remote receiver picks up and demodulates the signal transmitted by the transponder in said frequency slot;
- c) while transmitting said low-priority data, the transmitter/receiver picks up and demodulates the signal transmitted by the transponder in said frequency slot, evaluates an error rate of the demodulated signal, and interrupts the transmission of the low-priority data if the error rate exceeds a predetermined error threshold, indicating a presumable access to said frequency slot by another service;
- d) after interrupting the transmission of the low-priority data, step a) is resumed.

2. The method of claim 1, **characterized in that**, before initiating transmission of low-priority data on a given slot, the transmitter/receiver prefixes information on the number of data packets about to be transmitted, and, whenever the transmission of low-priority data is interrupted, the remote receiver notifies to the transmitted/receiver an indication of the lost packets over a terrestrial transmission channel.

3. The method of claim 1 or 2, **characterized in that** the evaluation of the error rate is carried out by decoding said demodulated signal by an error-correcting algorithm, and by then comparing the decoded signal with the demodulated signal.

4. The method of claim 3, **characterized in that** the error-correcting algorithm is a Reed-Solomon algorithm.

5. The method of any of claims 1 to 4 **characterized in that** a plurality of transponder slots are scanned, and the transmission is initiated on any of the slots that is found to be idle.

6. The method of claim 5 **characterized in that**, before the transmission of data in a slot is initiated, the identity of the slot about to be used is signaled to a remote receiver over a terrestrial transmission channel.

7. The method of any of claims 2 to 6, **characterized in that** said terrestrial transmission channel is a telephone network or intemet/Intranet.

8. The method of any of claims 1 to 7, **characterized in that** the low-priority data are transmitted with a protocol DVB Transport Stream, under standard ETSI EN 300 421.

## Patentansprüche

1. Verfahren zum Senden Daten geringer Priorität von einem erdbasierten Sender/Empfänger (T) an einen entfernten erdbasierten Empfänger (R) über einen Satellitentransponder (10), welcher für das Senden von Daten hoher Priorität in einem vorbestimmten Frequenzschlitz von einer Sendestation an eine Empfangsstation vorgesehen ist, **dadurch gekennzeichnet, dass** es die folgenden Schritte umfasst:
a) der Sender/Empfänger (T) überwacht, ob der Transponder (10) Daten hoher Priorität in dem Frequenzschlitz sendet, und zwar durch Überprüfen, ob ein Leistungsmesswert des Frequenzschlitzes höher als eine vorbestimmte Leistungsschwelle ist, und der entfernte Empfänger (R) überwacht die Aktivität des Transponders, um zu überprüfen, ob gerade Daten geringer Priorität in dem Frequenzschlitz gesendet werden;
b) immer dann, wenn der Frequenzschlitz frei von irgendwelchen von dem Transponder gesendeten Daten hoher Priorität ist, initiiert der Sender/Empfänger das Senden von Daten geringer Priorität gemäß einem gewünschten Protokoll und der entfernte Empfänger erfasst und demoduliert das von dem Transponder in dem Frequenzschlitz gesendete Signal;
c) während des Sendens der Daten geringer Priorität empfängt und demoduliert der Sender/Empfänger das von dem Transponder in dem Frequenzschlitz gesendete Signal, bestimmt eine Fehlerrate des demodulierten Signals und unterbricht das Senden der Daten geringer Priorität, falls die Fehlerrate eine vorbestimmte Fehlerschwelle überschreitet, wodurch ein voraussichtlicher Zugriff auf den Frequenzschlitz durch einen anderen Dienst angezeigt wird;
d) nach dem Unterbrechen des Sendens der Daten geringer Priorität wird Schritt a) wieder aufgenommen.

2. Verfahren gemäß Anspruch 1, **dadurch gekennzeichnet, dass** vor dem Initiieren des Sendens von Daten geringer Priorität in einem gegebenen Schlitz der Sender/Empfänger Informationen über die Anzahl der zum Senden anstehenden Datenpakete als Präfix bereitstellt, und immer dann, wenn das Senden der Daten geringer Priorität unterbrochen wird, unterrichtet der entfernte Empfänger den Sender/Empfänger mittels einer Angabe der verlorenen Pakete über einen erdgebundenen Sendekanal.

3. Verfahren gemäß Anspruch 1 oder 2, **dadurch gekennzeichnet, dass** das Bestimmen der Fehlerrate durch Dekodieren des demodulierten Signals mittels eines Fehlerkorrekturalgorithmus und durch anschließendes Vergleichen des dekodierten Signals mit dem demodulierten Signal durchgeführt wird.

4. Verfahren gemäß Anspruch 3, **dadurch gekennzeichnet, dass** der Fehlerkorrekturalgorithmus ein Reed-Solomon-Algorithmus ist.

5. Verfahren gemäß einem der Ansprüche 1 bis 4, **dadurch gekennzeichnet, dass** eine Mehrzahl von Transponderschlitzen abgetastet wird und das Senden auf einem beliebigen der Schlitze initiiert wird, von dem ermittelt wird, dass er nicht belegt ist.

6. Verfahren gemäß Anspruch 5, **dadurch gekennzeichnet, dass** bevor das Senden von Daten in einem Schlitz initiiert wird, die Identität des Schlitzes, der verwendet werden soll, einem entfernten Empfänger über einen erdgebundenen Sendekanal signalisiert wird.

7. Verfahren gemäß einem der Ansprüche 2 bis 6, **dadurch gekennzeichnet, dass** der erdgebundene Sendekanal ein Telefonnetzwerk oder das Internet/ein Intranet ist.

8. Verfahren gemäß einem der Ansprüche 1 bis 7, **dadurch gekennzeichnet, dass** die Daten geringer Priorität mit einem Protokoll-DVB-Transportstrom gemäß dem Standard ETSI EN 300 421 gesendet werden.

## Revendications

1. Procédé permettant de transmettre des données de priorité faible d'un émetteur/récepteur (T) basé au sol à un récepteur distant (R) basé au sol par l'intermédiaire d'un transpondeur de satellite (10) consacré à la transmission de données de priorité élevée dans un intervalle de fréquences prédéterminé d'une station de transmission vers une station de réception, **caractérisé en ce qu'**il comprend les étapes suivantes :
a) l'émetteur/récepteur (T) contrôle que le transpondeur (10) est bien en train de transmettre des données de priorité élevée dans ledit intervalle de fréquences en vérifiant si une mesure de puissance dudit intervalle de fréquences est supérieure à un seuil de puissance prédéterminé, et le récepteur distant (R) contrôle l'activité du transpondeur pour vérifier si les données de priorité faible sont transmises dans ledit intervalle de fréquences ;
b) à chaque fois que ledit intervalle de fréquences ne contient aucun élément de données de priorité élevée transmis par le transpondeur, l'émetteur/récepteur initie la transmission de données de priorité faible en fonction d'un protocole souhaité, et le récepteur distant collecte et démodule le signal transmis par le transpondeur dans ledit intervalle de fréquence ;
c) tout en transmettant lesdites données de priorité faible, l'émetteur/récepteur collecte et démodule le signal transmis par le transpondeur dans ledit intervalle de fréquences, évalue un taux d'erreur du signal démodulé et interrompt la transmission des données de priorité faible si le taux d'erreur dépasse un seuil d'erreur prédéterminé, indiquant un accès prévisible audit intervalle de fréquences par un autre service ;
d) après l'interruption de la transmission des données de priorité faible, l'étape a) est reprise.

2. Procédé selon la revendication 1, **caractérisé en ce que**, avant d'initier la transmission de données de priorité faible sur un intervalle donné, l'émetteur/récepteur préfixe une information sur le nombre de paquets de données devant être transmis et, à chaque fois que la transmission de données de priorité faible est interrompue, le récepteur distant envoie à l'émetteur/récepteur une indication sur les paquets perdus par le biais d'un canal de transmission terrestre.

3. Procédé selon la revendication 1 ou 2, **caractérisé en ce que** l'évaluation du taux d'erreur est effectuée en décodant ledit signal démodulé par un algorithme de correction d'erreur et en comparant ensuite le signal décodé au signal démodulé.

4. Procédé selon la revendication 3, **caractérisé en ce que** l'algorithme de correction d'erreur est un algorithme de Reed-Solomon.

5. Procédé selon l'une quelconque des revendications 1 à 4, **caractérisé en ce qu'**une pluralité d'intervalles de transpondeur est balayée, et **en ce que** la transmission est initiée sur l'un quelconque des intervalles détecté comme étant au repos.

6. Procédé selon la revendication 5, **caractérisé en ce que**, avant que la transmission de données dans un intervalle soit initiée, l'identité de l'intervalle qui va être utilisé est signalée à un récepteur distant sur un canal de transmission terrestre.

7. Procédé selon l'une quelconque des revendications 2 à 6, **caractérisé en ce que** ledit canal de transmission terrestre est un réseau téléphonique ou Internet/Intranet.

8. Procédé selon l'une quelconque des revendications 1 à 7, **caractérisé en ce que** les données de priorité faible sont transmises avec un protocole à Flux de transport DVB , sous la norme ETSI EN 300 421.
